# FASCICULE DE BREVET EUROPEEN

(11) **EP 0 456 650 B1**
(45) Date de publication et mention de la délivrance du brevet: **12.01.1994**
(21) Numéro de dépôt: 90901725.3
(22) Date de dépôt: 31.01.1990
(51) Int. Cl.: B65G 25/10

(54) **DISPOSITIF DE TRANSPORT DE MATIERE MEUBLE, A MOUVEMENT DE VA-ET-VIENT**
VORRICHTUNG ZUM FÖRDERN VON SCHÜTTGUT MIT HIN- UND HERBEWEGUNG
ALTERNATING CONVEYING DEVICE FOR LOOSE MATERIAL

(30) Priorité: 06.02.1989 BE 8900112
(43) Date de publication de la demande: 21.11.1991
(73) Titulaire: GETRASUR, F-77220 Presles en Brie (FR)
(72) Inventeur: ROUSSEAU, Jacques, B-6510 Morlanwelz (BE)
(74) Mandataire: Keib, Gérard
(86) Numéro de dépôt international: BE9000006
(87) Numéro de publication internationale: WO9008718

(56) Documents cités:
- FR-A- 2 579 571
- GB-A- 1 404 400
- US-A- 2 920 753

## Description

L'invention concerne un dispositif de transport de matière meuble, à mouvement de va-et-vient, du type convenant par exemple pour le transport de grenailles, matières pulvérulentes ou en grain, ou encore matière pâteuse, le long d'un couloir de transport.

De tels dispositifs sont connus dans la technique.

Ainsi, le brevet français n° 70 07236 (2 077 973) du 27 février 1970, qui est mentionné ici à titre de référence, divulgue un transporteur de matière meuble comprenant un couloir à fond fixe en forme d'auge recevant la matière à transporter, et une série de volets entraînés simultanément dans un mouvement de va-et-vient limité et dirigé suivant la longueur d'un couloir, ce mouvement comprenant un déplacement de translation rectiligne pour l'avancement de la matière, imposé par une butée également entraînée, contre laquelle s'applique le volet, dont l'extrémité est alors voisine du fond du couloir, sans le toucher, et un déplacement de translation en sens inverse, combiné avec un pivotement libre du volet se détachant de la butée, sous l'effet de son frottement contre la matière, dans lequel chaque volet a un profil de forme concave dans l'ensemble, à concavité tournée dans le sens de l'avancement de la matière, ce profil concave présentant néanmoins une partie plate adaptée à coopérer avec la butée plate afférente.

D'autre part, le brevet français n° 85 04565 du 27 mars 1985, qui est également mentionné ici à titre de référence, divulgue un dispositif de transport de produits granuleux ou pâteux, comprenant un couloir à fond fixe en forme d'auge, recevant la matière à transporter, et une série d'éléments impulseurs supportés par un châssis mobile entraîné par un élément moteur, dans lequel les éléments impulseurs résultent de la combinaison d'une lame flexible et d'un peigne rigide de telle sorte que, lors du mouvement de retour, le peigne rigide se déplace dans la matière sans l'entraîner tandis que la lame flexible se déforme et glisse sur la matière, et lors du mouvement aller de la lame flexible, vient coopérer avec le peigne rigide, ceci permettant d'obtenir une rigidité suffisante de l'élément impulseur pour assurer le déplacement de la matière.

Ces deux types de dispositifs de transport présentent un inconvénient en ce sens que, si une trop grande quantité de matière est amenée en une fois dans le couloir de transport, celui-ci peut s'engorger, les organes de transport (volets ou impulseurs ci-dessus) cessant alors d'être efficace jusqu'à une intervention extérieure.

Cet engorgement se produit en pratique lorsque la hauteur de la matière dans le couloir de transport devient trop grande par rapport à la hauteur des organes de transport. La position prise par ces organes, au cours d'une course de retour, est en effet alors telle (partie d'extrémité libre faisant un angle trop petit par rapport à la direction de déplacement) que ces organes glissent simplement, dans les deux sens, et en position de dégagement, sur la surface supérieure de la matière dans le couloir, la force de pénétration dans la matière, fonction dudit angle, n'étant plus suffisante.

Un but de l'invention est de résoudre au moins en substance ce problème d'engorgement.

Suivant l'invention, ce but est atteint à l'aide d'un dispositif de transport de matière meuble, comprenant un couloir à fond fixe en forme d'auge, pour recevoir la matière à transporter, et une série d'organes de transport, supportés dans le couloir par un châssis mobile en va-et-vient, en prévoyant que chaque organe de transport est formé d'une lame fixée par sa partie supérieure au châssis mobile et qui, sous la seule action des forces auxquelles elle est soumise au cours de son déplacement, tend à se placer dans une première position active, enfoncée dans la matière, en appui sur un organe de soutien, au cours de la course active du mouvement de va-et-vient du châssis mobile, et dans une position de dégagement par rapport à la matière au cours de la course de retour du mouvement du va-et-vient dudit châssis, dans lequel chaque organe de transport comprend au moins deux lames juxtaposées, en ce que ces dites lames ont une longeur telle qu'elles s'étendent jusqu'à des profondeurs différentes dans le couloir, et en ce que les profondeurs jusqu'aux quelles les lames juxtaposées s'étendent dans le couloir décroîssent la lame antérieure, disposée face à la direction de transport de la matière, à la lame postérieure, disposée à l'opposé de la direction de transport de la matière.

Suivant une autre caractéristique de l'invention les lames sont des lames rigides montées à pivotement sur le châssis mobile, à leur bord supérieur, et en ce que l'organe de soutien est une butée.

Suivant encore une autre caractéristique de l'invention, les lames sont des lames flexibles montées fixes sur le châssis mobile, à leur bord supérieur.

Suivant encore une autre caractéristique de l'invention, les lames flexibles ont ensemble une rigidité suffisante pour transporter la matière, au cours de la course active des organes de transport, sans appui extérieur autre qu'un appui pour la première lame postérieure active.

Suivant encore une autre caractéristique de l'invention, l'appui est une butée pour la lame postérieure la plus courte.

Suivant encore une autre caractéristique de l'invention, l'appui est constitué par une première lame postérieure inactive, ne servant pas au transport de la matière.

Suivant encore une autre caractéristique de l'invention, l'appui est constitué par l'organe postérieur de fixation des lames au châssis mobile.

Suivant encore une autre caractéristique de l'invention, les lames ont une rigidité croissante, de la lame active la plus courte à la lame la plus longue.

D'autres aspects, caractéristiques et avantages de l'invention apparaîtront de la description qui suit, et du dessin annexé sur lequel
La figure 1 est une vue latérale schématique, avec arrachage partiel, d'un dispositif de transport mettant en oeuvre un mode de réalisation de l'invention, comprenant des organes de transport ou éléments impulseurs à lames flexibles,
La figure 2 est une vue en coupe suivant A-A à la figure 1,
La figure 3 est une vue analogue à la figure 1, d'un dispositif mettant en oeuvre un autre mode de réalisation de l'invention, comprenant des organes de transport à lames ou volets rigides,
La figure 4 représente une variante d'un organe de transport à lames rigides selon le mode de réalisation de la figure 3,
La figure 5 est un schéma en coupe longitudinale, en élévation, du mode de fonctionnement d'un dispositif de transport selon la figure 1, à lames flexibles, les différentes positions (I) à (VI) représentant différents stades au cours d'un processus de transport, avec désengorgement, et
La figure 6 est un schéma similaire à celui de la figure 5, pour le mode de réalisation à lames rigides selon la figure 4.

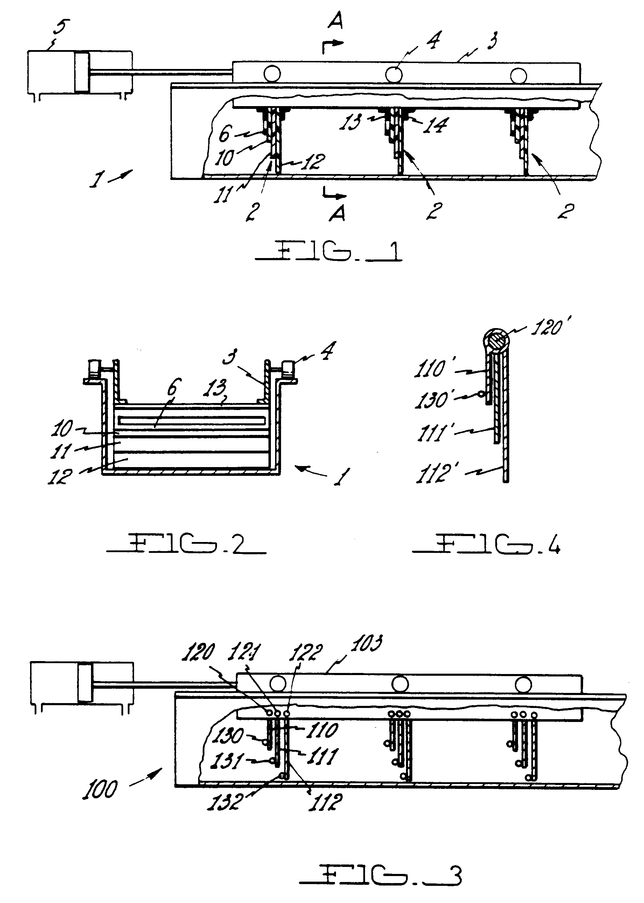

En ce reportant à la figure 1, le dispositif transporteur comprend un couloir 1 en forme d'auge, dans lequel des organes de transport 2 se déplacent en va-et-vient en étant montés sur un châssis mobile 3 monté à roulement, au moyen de galets 4, sur le couloir 1. La commande en va-et-vient du châssis 3 a été représentée schématiquement à la figure 1 par un vérin à double action 5.

Les organes de transport 2 sont identiques, et on n'en décrira donc qu'un ci-après.

Comme on le voit à la figure 1, un organe de transport 2 comprend trois lames 10, 11, 12 superposées, maintenues fermement par leur bord supérieur entre des profilés 13, 14 fixés au châssis 3.

Sous l'action du vérin 5, le châssis 3 adopte en fonctionnement un mouvement de va-et-vient comprenant une course active et une course de retour, la course active correspondant au déplacement vers la droite, et la course de retour au déplacement vers la gauche dans le plan de la figure 1.

L'organe de transport 2 comprend trois lames flexibles superposées, 10, 11, 12, dont les bords supérieurs, fixés au châssis 3, coïncident sensiblement. Comme on le voit au dessin, et c'est une caractéristique de l'invention, ces lames ont des hauteurs différentes, et progressivement décroissantes de la face antérieure vers la face postérieure (par rapport au sens de déplacement dans la course active), et la hauteur de la lame antérieure 12 correspond à la profondeur du couloir, de la même manière que la hauteur de la lame unique des dispositifs connus.

Le but des lames supplémentaires 10 et 11 est double.

D'abord, elles servent à supprimer les engorgements, comme on l'expliquera plus en détail en liaison avec la figure 5.

Dans les conditions normales de fonctionnement, ce par quoi on entend ici les périodes de fonctionnement sans engorgement, la lame antérieure 12 assure en substance seule tout le travail de transport, à la manière de la lame unique du dispositif connu, puisqu'elle couvre pratiquement toute la section du couloir, et qu'elle ne laisse pas, ou peu de matière derrière elle.

Pendant ces périodes au cours desquelles elle n'a donc pratiquement pas de rôle actif dans le transport de la matière, chaque lame supplémentaire 10, 11 assure encore sa seconde fonction, à savoir d'assurer un appui à la lame qui lui est immédiatement adjacente dans la direction de déplacement au cours de la course active. Ainsi, la lame 10 sert d'appui à la lame 11, celle-ci servant elle-même d'appui à la lame 12 qui assure le transport effectif de la matière lors de la course active vers la droite de la figure 1.

Dans le mode de réalisation représenté au dessin, la lame la plus courte 10, servant d'appui aux autres au cours d'une course active, s'appuie elle-même sur une butée 6 fixée au châssis 3. La lame 10 étant flexible, la butée 6 s'étendra de préférence sur toute la largeur, et à une distance suffisante de son bord inférieur pour éviter que celui-ci ne puisse passer de l'autre côté.

Lorsque l'élasticité des lames est convenablement calculée, ce dispositif de l'invention permet d'obtenir comme résultat une flexibilité suffisante des lames individuelles, pour qu'elles s'escamotent individuellement en fléchissant, sans entraîner en substance la matière, au cours de la course de retour (vers la gauche à la figure 1), et qu'elles réagissent ensemble, au cours de la course active, comme une seule lame suffisamment rigide prenant appui sur une butée à la manière d'un volet rigide.

Le nombre de ces lames dépendra, dans une application particulière, par exemple de la profondeur du couloir et de la densité ou de la viscosité (dans le cas d'une matière pâteuse) de la matière.

En tout état de cause, si la résistance d'un jeu de lames s'avère insuffisante, on peut prévoir au dos de l'organe de transport un organe de support, également fixé au châssis mobile, tel qu'une ou plusieurs barres horizontales, ou encore un treillis ou tout autre organe de support présentant une surface ouverte suffisante pour se laisser traverser par la matière, lors de la course de retour, en entraînant une quantité de celle-ci aussi faible que possible, et assurant également le soutien voulu des lames.

Le mode de fonctionnement de ce mode de réalisation de l'invention va maintenant être expliqué plus en détail en liaison avec la figure 5, où l'on a représenté un état d'engorgement du couloir.

Les références I à VI sur cette figure désignent différentes positions au cours du fonctionnement du dispositif, à savoir la position extrême sensiblement à la fin d'une course de retour pour les positions I, III et V, et une position intermédiaire au cours d'une course active pour les positions II, IV et VI.

Dans l'état I, en bout de course de retour, les trois lames sont représentées en état de flexion, avec leur partie d'extrémité libre reposant sur la surface supérieure de la matière dans le couloir.

Dans la position II, au cours de la première course active après que s'est produit l'engorgement, la lame 10 la plus courte, dont la partie d'extrémité libre forme le plus petit angle d'attaque par rapport à la surface de la matière, et présente donc la plus grande force de pénétration dans la matière, a pénétré dans la matière et transporte la partie supérieure de la quantité de matière se trouvant dans le couloir, en prenant appui sur la butée 6.

Dans la position III, la situation est la même que dans la position I, à la différence essentielle que la hauteur de la matière dans le couloir est moindre, ayant été réduite de la quantité transportée par la lame 10.

La situation dans la position IV est analogue à celle représentée dans la position II, si ce n'est que c'est ici la lame 11 qui assure le transport, en étant soutenue par la lame 10.

La hauteur de matière est encore réduite en position V, et c'est la lame 12 qui est active en position VI, en étant soutenue par les lames 10 et 11.

Il s'agit ci-dessus d'une description bien sûr fort schématique du fonctionnement, les choses pouvant éventuellement se passer plus ou moins rapidement, suivant entre autre la hauteur plus ou moins uniforme de la matière dans le couloir, les irrégularités (par leur pente ascendante dans le sens de la course active), ainsi qu'une plus forte grosseur des grains, par exemple, tendant à favoriser la pénétration des lames dans la matière.

En se reportant maintenant au mode de réalisation de la figure 3, celui-ci diffère du mode de réalisation de la figure 1 essentiellement en ce que les lames des organes de transport sont ici des lames rigides, montées à pivotement, par leur bord supérieur, sur le châssis mobile 103.

A la figure 3, les lames rigides 110, 111, 112 sont montées sur des axes de pivotement séparés, parallèles, 120, 121, 122. Dans la variante de la figure 4, les lames 110', 111', 112' sont montées à pivotement sur un même axe 120'.

Pour les lames rigides pivotantes on a, de manière connue, prévu des butées 130, 131, 132, respectivement 130', pour empêcher les lames de pivoter vers l'arrière, au-delà de leur position active sensiblement perpendiculaire à la direction de déplacement, au cours de la course active.

Il n'est cependant pas nécessaire de prévoir trois butées comme à la figure 3. On peut en effet prévoir une seule butée (comme la butée 130' pour la lame 110', figure 4), les autres lames prenant appui sur celle-ci. Il peut être judicieux dans ce cas de décaler suffisamment la butée unique vers la droite, dans le plan de la figure, pour que, en position active d'appui, la face antérieure de la lame antérieure fasse un angle obtu avec le fond du couloir, et que son action tende donc à repousser la matière vers le haut, en évitant un effet de coincement à la jonction lame-fond.

L'inconvénient relatif de la variante de la figure 4 est que la liaison de chaque lame à l'axe de pivotement ne peut s'étendre au plus que sur un tiers de la largeur du châssis 103, tandis que l'inconvénient relatif du mode de réalisation de la figure 3 est d'être plus complexe, et donc plus coûteux.

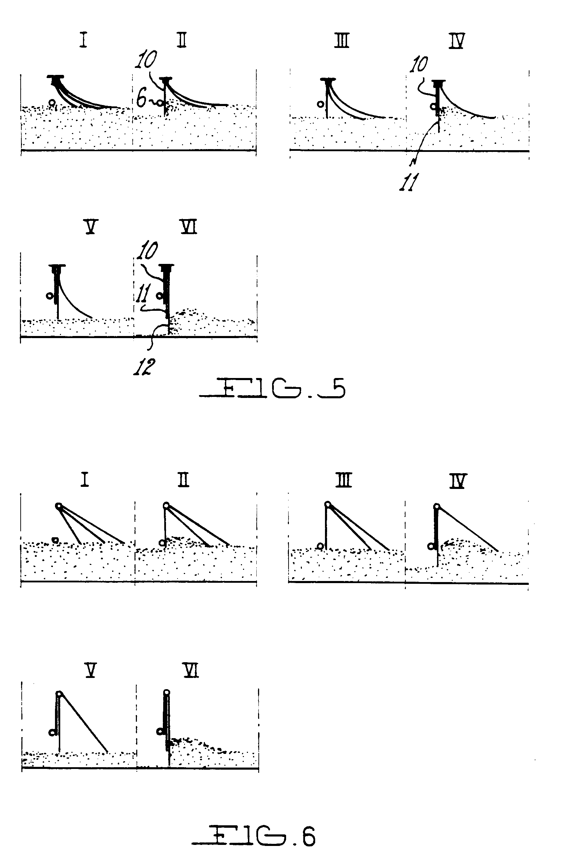

La figure 6 est analogue à la figure 5, mais pour le cas des lames rigides, montées sur un seul axe de pivotement selon la variante de la figure 4.

Bien que cet aspect de l'invention soit moins important dans le cas des lames rigides, qu'il suffit de construire suffisamment solides, on peut cependant également dans ce cas tenir compte, dans le calcul de leur résistance, de l'action de soutien que les lames postérieures assurent aux lames antérieures.

Dans la description qui précède, et les dessins annexés, on s'est limité à un mode de réalisation à trois lames.

Ceci ne constitue bien sûr qu'un exemple de mise en oeuvre de l'invention, qui comprendra de façon générale un nombre de lames, compris entre au moins deux et un nombre N généralement quelconque, adapté à l'application particulière envisagée, tennant compte en particulier de la nature des lames et de la nature de la matière à transporter.

Egalement, l'on a considéré dans ce qui précède que les lames étaient constituées de la même matière, et avaient la même épaisseur.

Il peut cependant être avantageux, au moins dans certaines applications à lames flexibles, de donner une rigidité plus grande aux lames les plus longues, pour augmenter la force élastique de rappel qui tend à les remettre en position droite, non fléchie.

Cette plus grande rigidité peut être obtenue aussi bien par un changement de matière (par exemple changement de nature ou de densité), que par une augmentation de l'épaisseur.

Enfin, dans le mode de réalisation des figures 1 et 2 on a prévu la butée 6 comme un organe distinct du dispositif, mais il faut comprendre que cette représentation de la butée 6 a été utilisée dans un but de simplification.

En effet, l'appui des lames flexibles au cours de la course active peut également être obtenu, par exemple par une première lame postérieure (lame 10 du mode de réalisation de la figure 1) suffisamment rigide pour assurer cette fonction (cette lame ne servant alors en fait plus au transport), ou encore en faisant jouer ce rôle d'appui à l'organe postérieur de fixation des lames (profilé 13).

## Revendications

1. Dispositif de transport de matière meuble, comprenant un couloir à fond fixe en forme d'auge, pour recevoir la matière à transporter, et une série d'organes de transport, supportés dans le couloir par un châssis mobile en va-et-vient, dans lequel chaque organe de transport est formé d'une lame fixée par sa partie supérieure au châssis mobile et qui, sous la seule action des forces auxquelles elle est soumise au cours de son déplacement, tend à se placer dans une première position active, enfoncée dans la matière, en appui sur un organe de soutien, au cours de la course active du mouvement de va-et-vient du châssis mobile, et dans une position de dégagement par rapport à la matière au cours de la course de retour du mouvement du va-et-vient dudit châssis, caractérisé en ce que chaque organe de transport (2; 100) comprend au moins deux lames (10 11, 12; 110, 111, 112; 110', 111', 112') juxtaposées, en ce que ces dites lames ont des longueurs telles qu'elles s'étendent jusqu'à des profondeurs différentes dans le couloir, et en ce que les profondeurs jusqu'aux quelles les lames juxtaposées s'étendent dans le couloir décroîssent de la lame antérieure, disposée face à la direction de transport de la matière (12; 112; 112') à la lame postérieure, disposée à l'opposé de la direction de transport de la matière (10; 110; 110').

2. Dispositif selon la revendication 1, caractérisé en ce que les lames sont des lames rigides 110, 111, 112; 110', 111', 112'), montées à pivotement sur le châssis mobile, à leur bord supérieur, et en ce que l'organe de soutien est une butée (130, 131, 132; 130').

3. Dispositif selon la revendication 1, caractérisé en ce que les lames sont des lames flexibles (10, 11, 12), montées fixes sur le châssis mobile, à leur bord supérieur.

4. Dispositif selon les revendications 1 et 3, caractérisé en ce que les lames flexibles ont ensemble une rigidité suffisante pour transporter la matière, au cours de la course active des organes de transport (2), sans appui extérieur autre qu'un appui pour la première lame postérieure active.

5. Dispositif selon la revendication 4, caractérisé en ce que l'appui est une butée (6) pour la lame postérieure (10) la plus courte.

6. Dispositif selon la revendication 4, caractérisé en ce que l'appui est constitué par une première lame postérieure inactive, ne servant pas au transport de la matière.

7. Dispositif selon la revendication 4, caractérisé en ce que l'appui est constitué par l'organe postérieur de fixation des lames au châssis mobile.

8. Dispositif selon l'une quelconque des revendications 3 à 7, caractérisé en ce que les lames ont une rigidité croissante, de la lame active la plus courte à la lame la plus longue.

## Claims

1. A device for conveying loose material, comprising a trough-shaped fixed-bottom passage to receive the material for conveying, and a series of conveying members supported in the passage by a reciprocating frame, wherein each conveying member is formed by a blade fixed by its top part to the movable frame and which, solely by the action of the forces to which it is subjected during its displacement, tends to move to a first operative position, in which it is embedded in the material, resting on a support member, during the operative stroke of the reciprocating movement of the movable frame, and to a disengaged position with respect to the material during the return stroke of the reciprocation of the said frame, characterised in that each conveying member (2; 100) comprises at least two juxtaposed blades (10, 11, 12; 110, 111, 112; 110', 111', 112'), in that the said blades have lengths such that they extend to different depths in the passage, and in that the depths to which the juxtaposed blades extend in the passage decrease from the front blade disposed facing the direction of conveyance of the material (12; 112; 112') to the rear blade disposed in the opposite direction to the direction of conveyance of the material (10; 110; 110').

2. A device according to claim 1, characterised in that the blades are rigid blades (110, 111, 112; 110', 111', 112'), mounted pivotally on the movable frame at their top edge and in that the support means is an abutment (130, 131, 132; 130').

3. A device according to claim 1, characterised in that the blades are flexible blades (10, 11, 12) mounted fixedly on the movable frame at their top edge.

4. A device according to claims 1 and 3, characterised in that the flexible blades together have a rigidity sufficient to convey the material during the operative stroke of the conveying members (2) without external support other than a support for the first operative rear blade.

5. A device according to claim 4, characterised in that the support is an abutment (6) for the shortest rear blade (10).

6. A device according to claim 4, characterised in that the support comprises a first inoperative rear blade which is not used for conveying the material.

7. A device according to claim 4, characterised in that the support is formed by the rear member for fixing the blades to the movable frame.

8. A device according to any one of claims 3 to 7, characterised in that the blades have increasing rigidity from the shortest operative blade to the longest blade.

## Patentansprüche

1. Transportvorrichtung für Schüttgut, mit einer muldenförmigen Rutsche mit feststehendem Boden, die das zu transportierende Material aufnimmt, und einer Reihe von Transportorganen, die in der Rutsche von einem beweglichen, hin- und hergehenden Rahmen getragen werden, in dem jedes Transportorgan durch eine Lamelle gebildet ist, die in ihrem oberen Abschnitt am beweglichen Rahmen befestigt ist und die allein aufgrund der Wirkung der Kräfte, denen sie im Laute ihrer Verstellung ausgesetzt ist, sich im Verlauf des aktiven Hubs der hin- und hergehenden Bewegung des beweglichen Rahmens in eine erste, aktive Position bewegt, bei der sie in das Material eingedrückt ist und sich gegen ein Halteorgan abstützt, und im Verlauf des Rücklaufs der hin- und hergehenden Bewegung des Rahmens in eine bezüglich des Materials gelöste Position bewegt, dadurch gekennzeichnet, daß jedes Transportorgan (2; 100) wenigstens zwei nebeneinanderliegende Lamellen (10, 11, 12; 110, 111, 112; 110', 111', 112') enthalt, daß die Lamellen solche Längen aufweisen, daß sie sich bis zu unterschiedlichen Tiefen in die Rutsche erstrecken, und daß die Tiefen, bis zu denen sich die nebeneinanderliegenden Lamellen in die Rutsche erstrecken, sich von der in der Transportrichtung des Materials vorderen Lamelle (12; 112; 112') zur in der Transportrichtung des Materials hinteren Lamelle (10; 110; 110') vermindern.

2. Vorrichtung nach Anspruch 1, dadurch gekennzeichnet, daß die Lamellen starre Lamellen (110, 111, 112; 110', 111', 112') sind, die an ihrem oberen Ende schwenkbar am beweglichen Rahmen angebracht sind, und daß das Halteorgan ein Anschlag (130, 131, 132; 130') ist.

3. Vorrichtung nach Anspruch 1, dadurch gekennzeichnet, daß die Lamellen flexible Lamellen (10, 11, 12) sind, die an ihrem oberen Rand fest am beweglichen Rahmen angebracht sind.

4. Vorrichtung nach den Ansprüchen 1 und 3, dadurch gekennzeichnet, daß die flexiblen Lamellen zusammen eine ausreichende Steifigkeit für den Transport des Materials während des aktiven Hubs des Transportorgans (2) aufweisen, ohne daß es, abgesehen von einer Abstützung für die erste aktive, hintere Lamelle, eine äußere Abstutzung gibt.

5. Vorrichtung nach Anspruch 4, dadurch gekennzeichnet, daß die Abstützung ein Anschlag (6) für die kürzeste, hintere Lamelle (10) ist.

6. Vorrichtung nach Anspruch 4, dadurch gekennzeichnet, daß die Abstützung durch eine erste inaktive, hintere Lamelle gebildet ist, die nicht zum Transport des Materials dient.

7. Vorrichtung nach Anspruch 4, dadurch gekennzeichnet, daß die Abstützung durch das hintere Befestigungsorgan der Lamellen am beweglichen Rahmen gebildet ist.

8. Vorrichtung nach einem der Ansprüche 3 bis 7, dadurch gekennzeichnet, daß die Lamellen eine von der kürzesten aktiven Lamelle zur längsten Lamelle zunehmende Steifigkeit aufweisen.
